(19) **Europäisches Patentamt / European Patent Office / Office européen des brevets**

(11) **EP 3 234 484 B1**

(12) **FASCICULE DE BREVET EUROPEEN**

(45) Date de publication et mention de la délivrance du brevet:
**17.10.2018 Bulletin 2018/42**

(21) Numéro de dépôt: **15820125.1**

(22) Date de dépôt: **18.12.2015**

(51) Int Cl.:
**F25B 49/02** (2006.01)    **F25B 1/10** (2006.01)
**F25B 30/02** (2006.01)

(86) Numéro de dépôt international:
**PCT/EP2015/080671**

(87) Numéro de publication internationale:
**WO 2016/097379 (23.06.2016 Gazette 2016/25)**

(54) **PROCÉDÉ DE MODIFICATION DE LA CONSOMMATION D'UNE POMPE À CHALEUR**

VERFAHREN FÜR DIE VERBRAUCHSÄNDERUNG VON EINER WÄRMEPUMPE

METHOD FOR CHANGING THE CONSUMPTION OF A HEAT PUMP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2014 FR 1462912**

(43) Date de publication de la demande:
**25.10.2017 Bulletin 2017/43**

(73) Titulaire: **Electricité de France**
**75008 Paris (FR)**

(72) Inventeurs:
• **COURTOT, François**
**59240 Dunkerque (FR)**
• **COINCE, Anne-Sophie**
**77210 Avon (FR)**
• **BERNASCONI, Stéphane**
**77810 Thomery (FR)**

(74) Mandataire: **Regimbeau**
**87 rue de Sèze**
**69477 Lyon Cedex 06 (FR)**

(56) Documents cités:
EP-A1- 2 485 189    DE-A1-102007 056 461
FR-A1- 2 719 440    FR-A1- 2 790 146
FR-A1- 2 991 440    US-A1- 2012 235 478

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE TECHNIQUE GENERAL

La présente invention concerne un procédé de modification de la consommation d'une pompe à chaleur.

ETAT DE L'ART

Aujourd'hui, les Maisons Individuelles (MI), c'est-à-dire les habitats privés non collectifs de petite taille, sont communément chauffées au fioul ou au gaz. Ces MI sont caractérisées par des appels de puissance chauffage importants et des niveaux de puissance électrique souscrite (puissance du compteur au-delà de laquelle ce dernier disjoncte) faibles (en majorité 6kVA pour les MI), ce qui est adapté à une chaudière fossile (qui utilise très peu l'énergie électrique).

Il apparait souhaitable, pour des questions économiques et environnementales, de substituer aux chaudières fossiles des solutions utilisant des pompes à chaleur (PAC).

Cependant la hausse de consommation électrique liée à la PAC augmente le risque que la puissance souscrite soit atteinte. Il est ainsi souhaitable de limiter la consommation de la PAC lorsque la consommation globale au compteur approche ou dépasse la limite souscrite, de sorte à éviter que l'utilisateur n'ait besoin d'augmenter la puissance d'abonnement souscrite, voire de modifier le réseau domestique (passage en tri-phasé), en entrainant des surcoûts.

Ceci est d'autant plus vrai que les pompes à chaleur peuvent être utilisées (en manipulant leur consommation) dans des solutions de pilotage de la charge associée en vue de maitriser l'aléa lié aux Energies Renouvelables, en particulier afin de stocker l'énergie thermiquement.

On connait par exemple de la demande FR1363225 un mécanisme de gestion astucieux de régulation en puissance permettant d'utiliser des pompes à chaleur installées (en particulier pour du chauffage d'eau et/ou de bâtiments) pour gérer la production électrique d'origine renouvelable, et ce facilement et efficacement : l'émission de consignes de puissance permet en effet d'augmenter ou de diminuer sur commande la consommation de ces pompes à chaleur et de jouer sur l'énergie stockée via le milieu en échange thermique. La capacité énergétique devient modulable. Plusieurs GWh sont ainsi disponibles à l'échelle du territoire français par exemple.

Le contrôle en puissance d'un compresseur d'un système de climatisation ou de pompe à chaleur, en agissant sur la vitesse du compresseur lorsque la consommation entre dans une zone de limitation de puissance, de façon à ne pas dépasser un seuil est une pratique connue. La demande FR1363225 propose par exemple de limiter la puissance totale maximale à 80% de la puissance souscrite, de sorte à laisser une marge de 20% permettant d'éponger la variabilité de consommation de l'habitation.

On connait par exemple du document JP 07-103554 une solution plus complexe : dès que le courant est suffisamment proche d'un seuil de coupure (par exemple 19.8A sur 20A), le système réduit la fréquence cible de rotation des compresseurs de sorte à limiter la hausse de consommation et prévenir la coupure.

Le document DE102007056461 A1 dévoile un procédé selon le préambule de la revendication 1 et un système selon le préambule de la revendication 13.

Outre le fait que les solutions connues sont la plupart du temps très limitatives, on constate qu'elles sont adaptées à un fonctionnement en limitation de puissance lorsque la puissance électrique d'une PAC doit rester sous une puissance limite fixe au cours du temps. Ces régulations ne permettent pas d'adapter la vitesse du compresseur de façon optimale dans le cas où la limite de puissance évolue au cours du temps, notamment lorsque le seuil peut passer rapidement sous la valeur de consommation courante du compresseur (cas de délestage).

Enfin, on constate que les techniques connues sont brutales pour le compresseur de la PAC, et peuvent entraîner des problèmes d'usure prématurée.

Il serait souhaitable de disposer, de façon générale, d'une solution de modification de la consommation électrique d'une pompe à chaleur qui permette d'éviter tout déclenchement d'un organe de coupure tout en optimisant la consommation électrique, et en maximisant la longévité des compresseurs de la pompe à chaleur.

PRESENTATION DE L'INVENTION

L'invention propose de pallier ces inconvénients en proposant selon un premier aspect un procédé de modification de la consommation d'une pompe à chaleur comprenant au moins un compresseur de fluide caloporteur alimenté par un réseau électrique et au moins un module de contrôle régulant en puissance la pompe à chaleur, un organe de coupure étant apte à interrompre l'alimentation électrique dudit compresseur, le procédé étant caractérisé en ce qu'il comprend des étapes de :

(a) Calcul par un élément de gestion d'une puissance disponible pour la pompe à chaleur en fonction d'au moins une puissance instantanée de la pompe à chaleur et une puissance maximale de référence associée à l'organe de coupure ;

(b) Si ladite puissance maximale de référence associée à l'organe de coupure est dépassée, calcul par l'élément de gestion d'un temps avant mise en oeuvre d'une coupure par l'organe de coupure en fonction de ladite puissance maximale de référence ;

(c) Limitation progressive par le module de contrôle de la puissance instantanée de la pompe à chaleur de sorte qu'à l'expiration dudit temps avant mise en oeuvre d'une coupure la puissance instantanée de la pompe à chaleur soit inférieure ou égale à ladite puissance disponible pour la pompe à chaleur.

Le procédé selon l'invention est avantageusement complété par les caractéristiques suivantes, prises seules ou en une quelconque de leur combinaison techniquement possible :

- ladite puissance maximale de référence associée à l'organe de coupure est une puissance de coupure d'un compteur électrique, la puissance disponible pour la pompe à chaleur étant également calculée à l'étape (a) en fonction d'une puissance instantanée mesurée par le compteur ;
- l'étape (b) est mise en oeuvre si la puissance instantanée mesurée par le compteur est supérieure à ladite puissance de coupure ;
- l'organe de coupure est un disjoncteur associé au compteur électrique ou un interrupteur intégré au compteur électrique ;
- la puissance disponible pour la pompe à chaleur $P_{pac\_seuil}$ est calculée à l'étape (a) par la formule $P_{pac\_seuil} = P_{pac} + (P_{compteur\_seuil} - P_{compteur})$, où $P_{pac}$ est ladite puissance instantanée de la pompe à chaleur, $P_{compteur\_seuil}$ est ladite puissance maximale de référence associée à l'organe de coupure, et $P_{compteur}$ est ladite puissance instantanée mesurée par le compteur ;
- ledit compresseur est un compresseur présentant une vitesse de rotation variable, le module de contrôle contrôlant la vitesse de rotation du compresseur pour réguler en puissance la pompe à chaleur, ladite limitation progressive de puissance de l'étape (c) étant une décélération progressive de la rotation dudit compresseur ;
- ladite décélération progressive de la rotation dudit compresseur est conforme à une rampe ;
- ladite rampe présente la pente minimale pour qu'à l'expiration dudit temps avant mise en oeuvre d'une coupure, la puissance instantanée de la pompe à chaleur soit inférieure à ladite puissance disponible pour la pompe à chaleur ;
- la pente de ladite rampe est donnée par la formule,

$$R = \frac{V_{pac} - V_{pac\_seuil}}{t_{coupure}}$$ où $V_{pac}$ est la vitesse de rotation du compresseur à la puissance instantanée, $V_{pac\_seuil}$ est la vitesse de rotation du compresseur à la puissance disponible, et $t_{coupure}$ est le temps de coupure ;

- l'élément de gestion est en outre configuré pour contrôler le module de contrôle en fonction d'au moins des données descriptives d'un état dudit réseau électrique, le module de contrôle régulant en puissance la pompe à chaleur en fonction d'au moins une consigne de puissance émise par l'élément de gestion ;
- les données descriptives d'un état dudit réseau électrique sont caractéristiques d'une surabondance actuelle et/ou d'un déficit futur d'énergie d'origine renouvelable au sein dudit réseau électrique, ladite consigne générée par l'élément de gestion étant une consigne de hausse de puissance, de sorte à augmenter la consommation du compresseur ;
- le compteur reçoit lesdites données descriptives d'un état du réseau électrique depuis un réseau de communication et est connecté au module de contrôle, l'élément de gestion étant un module logiciel mis en oeuvre par le module de contrôle et/ou le compteur.

Selon un deuxième aspect, l'invention concerne un système comprenant :

- une pompe à chaleur comprenant au moins un compresseur de fluide caloporteur alimenté par un réseau électrique, et un module de contrôle régulant en puissance la pompe à chaleur ;
- un organe de coupure apte à interrompre l'alimentation électrique dudit compresseur ;

le système étant caractérisé en ce que :

- il comprend en outre un élément de gestion configuré pour calculer une puissance disponible pour la pompe à chaleur en fonction d'au moins une puissance instantanée de la pompe à chaleur et une puissance d'une puissance maximale de référence associée à l'organe de coupure ; et, si ladite puissance maximale de référence associée à l'organe de coupure est dépassée, calculer un temps avant mise en oeuvre d'une coupure par l'organe de coupure en fonction de ladite puissance maximale de référence ;
- le module de contrôle est configuré pour limiter progressivement la puissance instantanée de la pompe à chaleur de sorte qu'à l'expiration dudit temps avant mise en oeuvre d'une coupure, la puissance instantanée de la pompe à chaleur soit inférieure ou égale à ladite puissance disponible pour la pompe à chaleur.

Selon des caractéristiques avantageuses :

- la pompe à chaleur est en échange thermique via un premier échangeur avec un milieu dont la température est à réguler, ledit milieu étant l'eau d'un réservoir d'eau chaude ou l'air intérieur d'une pièce ou l'eau d'un réseau de radiateurs ;
- la pompe à chaleur est une pompe à chaleur hybride comprenant en outre un moyen de chauffage alternatif dont la source d'énergie principale n'est pas le réseau électrique.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 est un schéma d'un premier mode de réalisation d'une installation pour la mise en oeuvre du procédé selon l'invention ;
- la figure 2 est un schéma d'un second mode de réalisation d'une installation pour la mise en oeuvre du procédé selon l'invention ;
- les figures 3a et 3b sont deux graphes illustrant des exemples d'évolution de deux paramètres lors de la mise en oeuvre du procédé selon l'invention.

DESCRIPTION DETAILLEE

*Architecture générale*

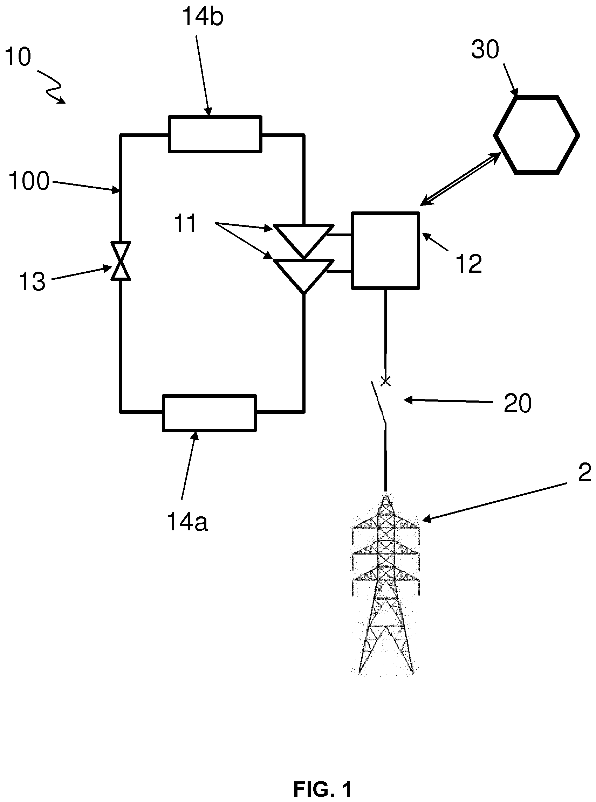

La **figure 1** représente l'architecture générale d'une installation électrique (typiquement un réseau domestique) dans laquelle est mis en oeuvre le présent procédé de modification de la consommation d'une pompe à chaleur 10. Cette installation est essentiellement constituée de ladite pompe à chaleur 10 (PAC).

L'installation peut comprendre plus d'une pompe à chaleur 10, par exemple dans le cas d'un système de régulation thermique d'un immeuble.

Comme l'on voit sur la figure 1, une pompe à chaleur 10 comprend un circuit 100 de fluide caloporteur (par exemple des hydrofluorocarbures, HFC) en particulier à changement de phase, sur lequel sont disposés successivement :

- un ou plusieurs compresseurs 11 (on comprendra qu'il peut également s'agir de plusieurs étages d'un même compresseur), en particulier un ou plusieurs compresseurs rotatifs (on verra pourquoi plus loin), même si d'autres technologies sont possibles ;
- un premier échangeur thermique 14a, en échange thermique avec un milieu local dont la température est à réguler (en particulier l'eau d'un chauffe-eau, l'air d'une pièce, etc.) ;
- un détendeur 13 ;
- un deuxième échangeur thermique 14b, en échange thermique avec un milieu externe (en particulier l'eau d'une rivière, l'air ambiant/extérieur, le sous-sol, etc.).

Une pompe à chaleur est un dispositif permettant de fournir de la chaleur ou du froid au milieu local dont la température est à réguler (via le premier échangeur 14a). Ce milieu est avantageusement l'eau d'un réseau de radiateurs de chauffage, l'eau d'un réservoir d'eau chaude ou l'air intérieur d'une pièce, et peut constituer un élément de stockage d'énergie thermique.

Dans un mode « chauffage », le premier échangeur 14a est un condenseur (le milieu local est une source froide) et le deuxième échangeur 14b un évaporateur (le milieu externe est une source chaude).

Dans un mode « production de froid » (en particulier climatisation), le premier échangeur 14a est un évaporateur (le milieu local est une source chaude) et le deuxième échangeur 14b un condenseur (le milieu externe est une source froide).

L'intérêt d'une pompe à chaleur par rapport à un émetteur électrique est son rendement (ou COP, Coefficient de Performance) supérieur à 1 : une partie de l'énergie fournie par la pompe est « gratuite » car prélevée dans l'environnement. Certaines pompes à chaleur sont capables d'alterner les deux modes de fonctionnement, simplement en changeant le sens de circulation du fluide dans le circuit 100.

La présente pompe à chaleur 10 peut aussi bien être chauffante que refroidissante.

Dans tous les cas, chaque pompe à chaleur 10 comprend un module de contrôle 12 dudit au moins un compresseur 11. En cas d'une pluralité de compresseurs 11, il peut y avoir un module de contrôle 12 commun, ou un par compresseur/étage de compresseur 11. Dans la suite de la présente description, on fera l'hypothèse que la pompe à chaleur 10 comprend un unique compresseur 11, mais l'homme du métier saura extrapoler l'invention quel que soit le nombre de compresseurs 11 et/ou d'étages.

Le compresseur 11 est électrique, et alimenté par un réseau électrique 2. Le système peut, le cas échéant, comprendre des sources « d'appoint » telles que des résistances chauffantes ou des brûleurs à gaz, un échangeur avec un collecteur solaire, etc. De façon préférée, la présente pompe à chaleur 10 est ainsi une PAC « hybride », c'est-à-dire un système de chauffage d'eau chaude (en particulier sanitaire) combinant dans un même produit une pompe à chaleur air/eau et un moyen de chauffage alternatif dont la source d'énergie principale n'est pas le réseau électrique 2, i.e. que le moyen de chauffage alternatif comprend un élément de chauffage non alimenté par le réseau 2 (en particulier une chaudière à combustible fossile). Ces systèmes peuvent remplacer une chaudière existante sans modification des émetteurs de chaleur (radiateurs ou plancher chauffant). Les PAC hybrides sont particulièrement adaptées à la rénovation des maisons individuelles chauffées au gaz ou au fioul. La technologie hybride a de nombreux atouts : production d'une part d'énergie renouvelable, économiquement rentable pour l'utilisateur dans les conditions actuelles et très flexible (appel de puissance électrique 100% effaçable).

Le réseau 2 est un réseau à grande échelle qui relie une pluralité de sources électriques. Comme expliqué précédemment, il s'agit à la fois d'énergie d'origine non-renouvelable (nucléaire et/ou fossile) et d'origine renouvelable (solaire, éolien, etc.). L'énergie d'origine renouvelable présente des problèmes de variabilité et de prévisibilité, alors que l'énergie d'origine non-renouvelable est d'une meilleure disponibilité.

En aval d'un compteur électrique 31 de l'habitation, on trouve le réseau domestique (par opposition au réseau global 2) de l'habitation dans laquelle la pompe à chaleur 10 est installée. Ce réseau domestique englobe en outre de nombreux points de consommation (éclairage, électroménager, etc.), dont la pompe à chaleur 10, tous alimentés via le même point d'entrée, et tous placés en aval du compteur électrique 31 (et comme l'on verra d'un organe de coupure 20).

Une pompe à chaleur, qu'elle fonctionne en chauffage ou en production de froid, est régulée en température. Pour cela, elle comprend une ou plusieurs sondes de température disposées directement dans le milieu à réguler en température et/ou dans un milieu en échange avec celui-ci (par exemple le circuit de distribution de froid ou de chaleur) qui envoient en permanence ou par intermittence un signal représentatif de la température au module de contrôle 12.

Ce dernier est typiquement une carte électronique qui pilote le compresseur 11 en fonction de la température, de la température de consigne et de nombreux autres paramètres éventuels (température extérieure, programmation, saison, plages horaires, heures creuses/heures pleines, usages habituels de l'utilisateur, absence, etc.).

De façon générale, une pompe à chaleur 10 comprend le plus souvent deux températures de seuil (dont la valeur peut varier selon le moment et des réglages personnels) : une première température de seuil qui est la température « minimale » et une deuxième température de seuil qui est la température « maximale » (le premier seuil est inférieur au deuxième seuil). Ces deux seuils sont quelques degrés autour (par exemple +/- 1°C) d'une température de « confort » qui est la température moyenne souhaitée, réglée par l'utilisateur (l'intervalle 19-21°C est courant dans un logement) ou d'une température cible au niveau du circuit de distribution qui permet d'assurer le confort. Cette valeur cible peut dépendre de la température extérieure comme c'est le cas des pompes à chaleur régulées selon une loi d'eau.

Le module de contrôle 12 est ainsi configuré pour maintenir la température du milieu entre les deux seuils, en d'autres termes activer le compresseur 11 lorsque la température mesurée est inférieure au premier seuil prédéfini, et/ou configuré pour désactiver le compresseur 11 lorsque la température mesurée est supérieure au deuxième seuil prédéfini. Il est à noter que si la pompe à chaleur 10 fonctionne en mode production de froid, les deux seuils sont inversés (en d'autres termes, le premier seuil correspond à une température plus élevée que le deuxième seuil). En effet, la mise en route du compresseur 11 dans ce mode entraîne une climatisation, et donc une baisse de la température.

Il peut y avoir plus de deux seuils, éventuellement mobiles, par exemple de façon à optimiser la consommation d'énergie pendant les heures creuses/pleines.

Dans le cas des pompes à chaleur à vitesse variable, la puissance est modulée pour satisfaire les besoins thermiques. Dans ce cas le module de contrôle 12 peut moduler la vitesse du compresseur 11 de façon à approcher au maximum de la consigne de température (les seuils ne sont pas nécessaires avec une PAC inverter, voir plus loin).

La présente invention n'est limitée à aucune configuration en particulier de la pompe à chaleur 10, et on comprendra que de façon générale la régulation en température est souhaitable pour le confort des usagers, mais n'est pas impérative dans le présent système.

Outre la pompe à chaleur 10, l'installation pour la mise en oeuvre du présent procédé comprend un organe de coupure 20 via lequel la pompe à chaleur 10 (ainsi qu'en général de nombreux autres équipements du réseau domestique) est alimentée. Par organe de coupure, on entend tout dispositif électrique apte à interrompre l'alimentation électrique dudit compresseur 11 dans certaines conditions, en particulier lorsqu'une puissance trop importante est consommée par la pompe à chaleur 10. A ce titre, une puissance maximale de référence est associée à l'organe de coupure 20. En particulier, l'organe de coupure 20 est configuré pour ouvrir le circuit alimentant en électricité au moins le compresseur 11 (et le reste de la pompe à chaleur 10) lorsque ce circuit consomme une puissance supérieure à la puissance maximale de référence.

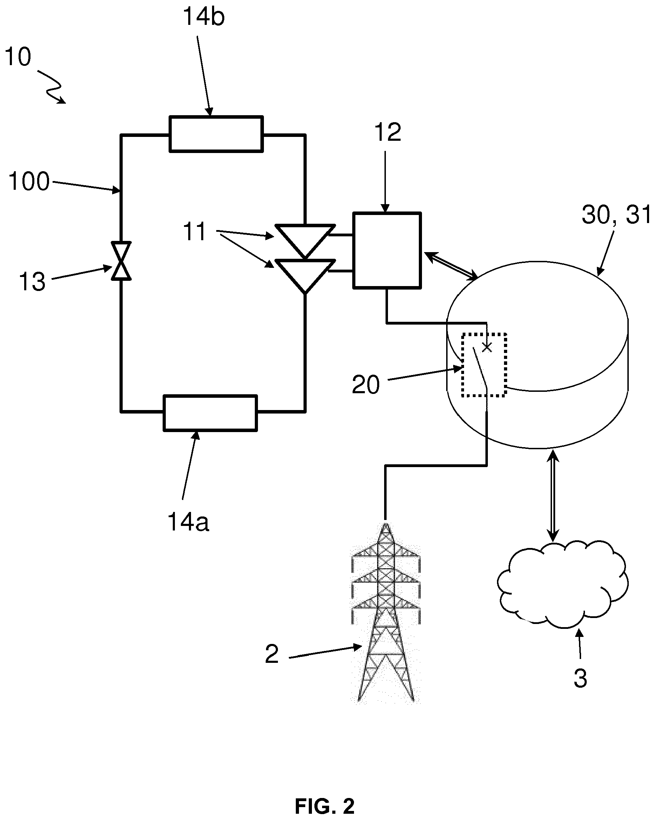

De façon préférée, la puissance maximale de référence associée à l'organe de coupure 20 est une puissance de coupure sur dépassement d'une puissance d'abonnement au réseau électrique 2, appelée également puissance souscrite. Une telle puissance de coupure est généralement associée à un compteur électrique 31 (dans la suite de la description, on appellera puissance de coupure du compteur la puissance de coupure sur dépassement associée à ce compteur 31). L'organe de coupure 20 est soit intégré au compteur électrique 31 (cas de la **figure 2**) auquel ladite puissance de coupure est associée, c'est alors typiquement un interrupteur programmable, soit indépendant du compteur 31, c'est alors typiquement un disjoncteur de branchement (voir plus loin).

On note que le compteur 31 est préférentiellement un compteur électrique communicant (par exemple LINKY) disposant d'un émetteur Télé-Information Client (TIC) intégré ou non.

Comme expliqué avant, la puissance de coupure sur dépassement est typiquement de 6kVA pour une habitation (i.e. 6kW). L'organe de coupure 20 se déclenche (et coupe l'alimentation électrique) si une puissance instantanée mesurée par le compteur 31 est supérieure à ladite puissance de coupure (dans notre exemple si plus de 6kW sont consommés sur le réseau domestique en aval de l'organe de coupure 20). On note que cette puissance de coupure peut évoluer dynamiquement dans le temps.

De façon classique, les disjoncteurs (en particulier de branchement) équipant les habitations sont de type « thermique » ou « magnétothermique », simples et robustes. Un tel organe de coupure 20 se déclenche quand un courant excessif traverse un bilame (assurant au repos la conduction électrique) et crée, par effet Joule, un échauffement du bilame et sa déformation, ce qui ouvre mécaniquement le circuit électrique. On connait d'autres types tels que les disjoncteurs magnétiques, et on connait des disjoncteurs « virtuels », c'est-à-dire des interrupteurs dont le fonctionnement est simulé par une carte éléctronique (en particulier une carte électronique d'un compteur intelligent tel qu'un compteur LINKY), en particulier de sorte à reproduire le comportement d'un disjoncteur traditionnel (en particulier un disjoncteur thermique). Ce mode de réalisation est illustré par la figure 2.

On comprendra ainsi que de façon préférée l'organe de coupure 20 est un disjoncteur associé au compteur 31, en particulier soit un disjoncteur thermique (intégré ou non au compteur 31), soit un interrupteur logiciel (mis en oeuvre par le compteur 31) simulant le fonctionnement d'un disjoncteur thermique.

Tous les organes de coupure 20 traditionnels (et donc par analogie les disjoncteurs simulés par des compteurs 31), présentent un temps de réaction à un dépassement de la puissance de coupure. On note qu'un disjoncteur thermique est relativement lent et met typiquement plusieurs secondes à réagir. L'idée est qu'à partir du moment où la puissance instantanée atteint la puissance de coupure, une quantité d'énergie est nécessaire pour déclencher effectivement la coupure : le disjoncteur n'étant jamais parfait, cette coupure n'est pas instantanée.

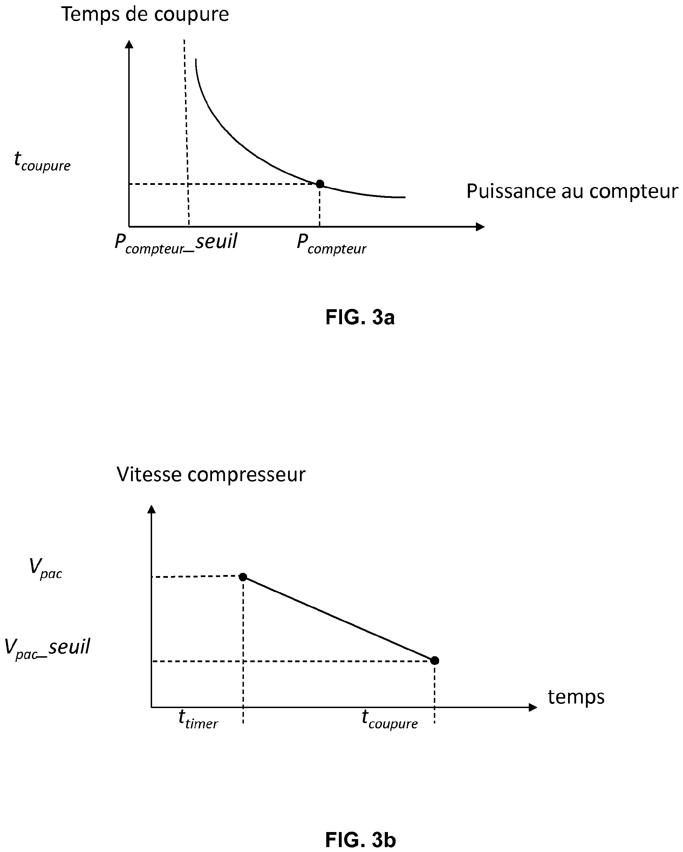

En d'autres termes, il existe un temps de coupure $t_{coupure}$, i.e. le temps avant mise en oeuvre d'une coupure par l'organe de coupure 20 qui présente typiquement un profil sensiblement hyperbolique tel qu'on peut le voir sur la **figure 3a** et qui s'explique assez naturellement : si la surconsommation est assez faible la coupure prendra du temps, alors que si la surconsommation est violente la coupure sera presque instantanée.

On note que sont connues (décrites dans des normes et des documentations constructeur) des fonctions donnant pour un organe de coupure 20 $t_{coupure}$ en fonction de la valeur $\Delta P$ du dépassement de la puissance de coupure et vaut $P_{compteur}$ - $P_{compteur\_seuil}$ ($P_{compteur\_seuil}$ est la puissance maximale de référence associée à l'organe de coupure 20, i.e. la puissance seuil de coupure ou encore la « puissance souscrite », et $P_{compteur}$ est la puissance instantanée mesurée par le compteur 31).

Comme l'on verra, le présent procédé de modification de la consommation d'une pompe à chaleur 10 propose d'exploiter ce temps de coupure pour tolérer des dépassements de puissance de coupure tout en évitant effectivement la coupure.

*Régulation de la puissance*

La présente pompe à chaleur 10 est une pompe à chaleur à variateur électronique (connue sous le nom de *inverter*), c'est-à-dire qu'elle module sa puissance électrique (et ainsi sa puissance thermique) en fonction de différents besoins.

Ainsi le module de contrôle 12 régule en puissance la pompe à chaleur 10 (c'est-à-dire qu'il fait varier la puissance électrique consommée, ce qui fait varier la puissance thermique développée par la pompe à chaleur 10), et plus précisément régule en puissance son ou ses compresseurs 11. Pour cela, la pompe à chaleur 10 fait par exemple varier la vitesse du moteur du compresseur 11. Dans ce cas, au moins un compresseur 11 de la pompe à chaleur 10 est un compresseur (rotatif) présentant une vitesse de rotation variable, le module de contrôle 12 jouant ce rôle de variateur électronique contrôlant la vitesse de rotation du compresseur 11. En d'autres termes, en fonction d'une consigne fournie, le module de contrôle 12 calcule et impose une vitesse de rotation spécifique à un compresseur 11. On comprendra que la régulation de puissance n'implique pas nécessairement une régulation de vitesse de rotation, même si elle est préférée, et que d'autres techniques sont possibles : par exemple, il peut y avoir une pluralité de compresseurs 11 de puissances nominales différentes, et le module de contrôle 12 en active (en tout ou rien) un sous-groupe choisi pour approcher au mieux la puissance requise. Le calcul d'une vitesse de rotation à partir d'une commande de puissance (électrique ou thermique) est connu de l'homme du métier, et les constructeurs disposent le plus souvent de leurs propres algorithmes. Le système VRV de Daikin® est un exemple de pompe à chaleur à puissance variable. Ce système permet le fonctionnement de la pompe à chaleur à un niveau de puissance choisi parmi une pluralité de niveaux entre 0 et 100% d'une puissance nominale. La régulation de puissance est dans ce système mise en oeuvre de sorte à réduire les émissions sonores.

On verra plus loin comment la présente pompe à chaleur 10 peut être régulée en puissance. On comprendra que la présente invention n'est limitée à aucune régulation, et on comprendra que par « pompe à chaleur comprenant un module de contrôle régulant en puissance la pompe à chaleur 10 », on entendra toute pompe à chaleur capable de présenter une consommation électrique et donc une puissance variable, que ce soit en contrôlant la puissance thermique développée, la vitesse de rotation des compresseur ou directement la puissance électrique consommée. Les trois grandeurs sont en effet inextricablement liées.

*Puissance disponible et décélération d'urgence*

Le procédé comprend une première étape (a) (on verra qu'elle peut être indépendante temporellement de l'étape (b)) de calcul par un élément de gestion 30 d'une puissance disponible pour la pompe à chaleur 10 en fonction d'au moins la puissance électrique instantanée de la pompe à chaleur 10 et la puissance maximale de référence associée à l'organe de coupure 20 (i.e. la puissance de coupure).

L'élément de gestion 30 peut comprendre un module de traitement de données (un processeur) connecté au module de contrôle 12 de la pompe à chaleur 10, à l'organe de coupure 20 et/ou au compteur 31. Si le module de contrôle 12 est une carte électronique évoluée comprenant déjà un processeur, l'élément de gestion 30 peut être un module logiciel directement mis en oeuvre par le module de contrôle 12 (ce qui est possible pour des pompes à chaleur 10 neuves). La même chose est possible pour le compteur 31. L'invention n'est en effet pas limitée à un élément de gestion 30 physique. On note que le module de contrôle 12 et le compteur 31 peuvent se partager les fonctions de l'élément de gestion 30.

Dans le cas d'un élément de gestion 30 physique, celui-ci peut se brancher sur le module de contrôle 12 d'une pompe à chaleur 10 à variateur existante (et sur le compteur 31), et ne nécessite qu'une modification logicielle minime sans modification structurelle.

Par puissance disponible, on entend une puissance électrique théorique maximale pouvant être consommée par la pompe à chaleur 10 avant déclenchement de l'organe de coupure 20.

On note que la puissance consommée par la pompe à chaleur 10 l'est essentiellement par le ou les compresseurs 11, même si les auxiliaires (par exemple le module de contrôle 12) peuvent représenter 20% de la puissance consommée. La puissance de la pompe à chaleur 10 reste complètement liée à la vitesse du compresseur 11 : à un point de fonctionnement donné, la consommation de la pompe à chaleur 10 dépend uniquement de la vitesse du compresseur (les auxiliaires sont commandés en fonction de la vitesse du compresseur).

De façon préférée, le calcul prend en compte la puissance instantanée du compteur 31 et utilise notamment la formule $P_{pac\_seuil} = P_{pac} + (P_{compteur\_seuil} - P_{compteur})$, où $P_{pac}$ est ladite puissance instantanée de la pompe à chaleur 10 (et $P_{pac\_seuil}$ la puissance disponible pour la pompe à chaleur 10). $P_{pac}$ est préférentiellement obtenue par un moyen de mesure directe ou indirecte intégré à la PAC.

Si cette puissance disponible est largement supérieure à la puissance instantanée de la pompe à chaleur 10, c'est qu'on est loin d'un risque de déclenchement de l'organe de coupure 20. Dans le cas contraire une coupure est potentiellement proche, et si $P_{pac\_seuil} < P_{pac}$, c'est que la coupure est imminente (le temps de coupure a déjà commencé à défiler). Dans le cas d'un compresseur 11 à vitesse de rotation variable l'élément de gestion 30 (ou le module de contrôle 12) calcule des vitesses de rotation du compresseur 11 $V_{pac\_seuil}$, $V_{pac}$ respectivement associées aux puissances $P_{pac\_seuil}$, $P_{pac}$. Le calcul de $V_{pac\_seuil}$ se base sur des tables, des corrélations, ou un modèle numérique, décrivant la relation entre la vitesse du compresseur 11 et la puissance électrique consommée par la pompe à chaleur 10, sur l'ensemble de la plage de fonctionnement possible de la pompe à chaleur. On note que le point de fonctionnement courant de la pompe à chaleur 10 est préférentiellement obtenu à partir d'une ou plusieurs sondes de mesure intégrées à la pompe à chaleur 10. On note que $P_{pac}$ (puissance électrique consommée par la pompe à chaleur 10) et $V_{pac}$ (vitesse courante instantanée du compresseur 11) peuvent intervenir dans la calcul de $V_{pac,\_seuil}$.

Cette étape (a) peut être mise en oeuvre à intervalle régulier (à chaque pas de temps du module de contrôle 12).

Dans une étape (b), l'élément de gestion 30 calcule, si ladite puissance maximale de référence associée à l'organe de coupure 20 est dépassée (en d'autres termes si le seuil est franchi et que la coupure est imminente), le temps avant mise en oeuvre d'une coupure par l'organe de coupure 20 (i.e. le temps de coupure) en fonction de ladite puissance maximale de référence. On utilisera notamment, comme expliqué, des interpolations, des courbes de coupures caractéristiques d'organes de coupure 20, des tables, des modèles numériques calés à partir de paramètres connus, ou des filtres numériques reproduisant le comportement de coupure d'un disjoncteur « virtuel » intégré dans un compteur communiquant.

Il est à noter que l'étape (b) peut être tentée à intervalles réguliers (à chaque mise en oeuvre de l'étape (a), ou selon un pas de temps différent), à partir des données du compteur 31.

Alternativement, ce test peut être fait (toujours à intervalle régulier) sur la base des valeurs obtenues à l'étape (a), en comparant $P_{pac\_seuil}$ et $P_{pac}$. On note que la fréquence de test peut dépendre de l'écart entre $P_{pac\_seuil}$ et $P_{pac}$ (par exemple à chaque pas de temps dès lors que $P_{pac} > 0.8 \times P_{pac\_seuil}$)

Selon une troisième possibilité, l'étape (b) est déclenchée sur réception d'un signal de la part du compteur 31 signalant que $P_{compteur}$ atteint $P_{compteur\_seuil}$.

Dans tous les cas, tant que la condition de déclenchement de l'étape (b) n'est pas vérifiée, le module de contrôle 12 continue à réguler en puissance (thermique ou électrique, ou via une vitesse de rotation des compresseur) la pompe à chaleur 10 de façon nominale (en particulier conformément à une consigne, voir plus loin).

Dans le cas contraire, c'est-à-dire lorsque la puissance de coupure est dépassée, le module de contrôle 12 entraîne sous l'égide de l'élément de gestion 30 une procédure de décélération progressive et contrôlée du compresseur 11, appelée « décélération d'urgence ».

A ce titre, l'étape (c) du procédé consiste en la limitation progressive par le module de contrôle 12 de la puissance électrique instantanée de la pompe à chaleur 10 de sorte qu'à l'expiration dudit temps avant mise en oeuvre d'une coupure la puissance instantanée de la pompe à chaleur 10 soit inférieure ou égale à ladite puissance disponible pour la pompe à chaleur 10, et ainsi que la coupure n'ait pas lieu. La consommation de la pompe à chaleur 10 est ainsi maintenue à son maximum théorique (on évite ainsi d'imposer par exemple un seuil de sécurité vis-à-vis de la puissance de coupure), sans risquer des freinages brutaux du compresseur 11 (voire des interruptions violentes si l'organe de coupure 20 est effectivement déclenché).

En d'autres termes, le présent procédé propose de ramener la consommation du compresseur 11 sous le seuil dans un temps maximal donné, avant que l'organe de coupure 20 ne se déclenche.

Dans le cas d'un compresseur 11 rotatif, l'objectif est que la vitesse de rotation suive une rampe telle que représentée sur la **figure 3b**. Sur la figure 3b, $t_{timer}$ désigne le temps actuel. Une telle rampe permet des contraintes minimales sur le compresseur 11 en évitant un freinage brutal. Durant cette phase de baisse de puissance, il est en effet important de limiter la vitesse de décélération, de façon à garantir notamment la bonne lubrification du compresseur 11, et éviter l'aspiration de réfrigérant liquide par le compresseur 11 lors de phases de décélération brutales, de façon à maximiser sa longévité. Cette problématique n'est pas prise en compte dans les solutions existantes pour la prévention du déclenchement d'un organe de coupure 20.

De façon préférée, ladite rampe présente ainsi la pente minimale pour qu'à l'expiration dudit temps avant mise en oeuvre d'une coupure la puissance instantanée de la pompe à chaleur 10 soit inférieure ou égale à ladite puissance disponible pour la pompe à chaleur 10.

Une telle pente est par exemple donnée par la formule $R = \dfrac{V_{pac} - V_{pac\_seuil}}{t_{coupure}}$. On note que la rampe peut être appliquée directement sur la puissance (par exemple pour un compresseur 11 non rotatif) avec une pente $R = \dfrac{P_{pac} - P_{pac\_seuil}}{t_{coupure}}$. Cette formule est applicable pour un compresseur 11 rotatif mais ne garantit pas une déclaration optimale (la vitesse de rotation n'est pas linéaire). On note que l'on peut appliquer des coefficients de sécurité dans le calcul de la rampe pour prendre en compte d'éventuelles incertitudes sur le calcul de $t_{coupure}$, le calcul de $V_{pac\_seuil}$, et la mesure ou le calcul de $P_{pac}$.

*Consigne de puissance*

Pour la régulation en puissance en fonctionnement nominal (i.e. tant que l'étape (c) n'est pas mise en oeuvre), un équipement (qui est de façon préférée l'élément de gestion 30 lui-même) est avantageusement configuré pour contrôler le module de contrôle 12 en particulier en fonction de données descriptives d'un état dudit réseau électrique 2, le module de contrôle 12 régulant en puissance la pompe à chaleur 10 en fonction d'au moins une consigne de puissance émise par cet équipement. Comme expliqué, le terme « puissance » doit être pris au sens large, et la consigne de puissance peut être exprimée sous différentes formes. Elle est ainsi soit une consigne de puissance thermique à développer, soit une consigne de vitesse de rotation de compresseur, soit directement une consigne de puissance électrique à consommer.

Dans le mode de décélération d'urgence (étape (c)), l'élément de gestion 30 configuré pour l'émission de consignes de puissance interrompt la consigne de puissance en cours et en génère à destination du module de contrôle une nouvelle conforme à la limitation de puissance progressive attendue.

En d'autres termes, dans un cas comme dans l'autre, l'élément de gestion 30 calcule une consigne de puissance (par consigne de puissance, on entend soit une consigne absolue, soit une consigne relative, c'est-à-dire une consigne de variation de puissance) et l'envoie au module de contrôle 12, qui contrôle le compresseur 11 en conséquence. Comme expliqué dans la demande FR1363225, la consigne de puissance est avantageusement une consigne dynamique qui permet de moduler en temps réel la consommation d'une pompe à chaleur 10.

Cette consigne peut ainsi être absolue (cas de la consigne de décélération d'urgence en particulier), en d'autres termes une valeur de puissance à atteindre, mais alternativement (cas de la consigne nominale exclusivement) il s'agit d'une consigne relative, en d'autres termes une consigne de hausse ou de baisse de la puissance. Cette première possibilité (hausse) sera plus particulièrement discutée dans la suite de la présente description, car c'est elle qui est susceptible de déclencher l'organe de coupure 20.

Le but visé est la modulation de la puissance consommée, sans changement notable du confort des usagers. Par exemple, une pompe à chaleur 10 configurée en « chauffage » peut voir sa puissance augmentée pour consommer davantage d'électricité, cette électricité étant au final stockée sous forme de capacité calorifique du milieu chauffé par la pompe à chaleur (quelques degrés de plus). Inversement, une pompe à chaleur 10 configurée en « climatisation » peut voir sa puissance augmentée pour consommer davantage d'électricité, cette électricité étant au final stockée sous forme de capacité calorifique « manquante » du milieu chauffé par la pompe à chaleur, en d'autres termes du froid d'avance.

Le mécanisme de gestion permet ainsi d'utiliser les pompes à chaleur installées pour gérer la production électrique d'origine renouvelable, et ce facilement et efficacement : l'émission de consignes de puissance permet en effet d'augmenter ou de diminuer sur commande la consommation de ces pompes à chaleur et de jouer sur l'énergie stockée via le milieu en échange thermique. La capacité énergétique devient modulable. Plusieurs GWh sont ainsi disponibles à l'échelle du territoire français par exemple.

Ceci permet par exemple de privilégier la consommation électrique tant que le photovoltaïque est largement disponible, et de limiter la consommation électrique ou se rabattre sur d'autres énergies (par exemple via des moyens de chauffage alternatifs tels des brûleurs si le système 1 en comprend) sinon.

Dans le cas de pompes à chaleur neuves, la fonction de génération de consignes de puissance peut être directement intégrée au module de contrôle 12 comme une fonction supplémentaire afin d'éliminer la nécessité de boitier supplémentaire. Son effet est alors vu comme une supervision de la régulation de température.

Le pilotage pour la régulation en puissance est réalisé en fonction d'au moins des données descriptives d'un état dudit réseau électrique 2 (et éventuellement d'autres données telles que des températures, des prix de l'électricité, etc.). Ces données descriptives d'un état dudit réseau électrique 2 désignent de façon générale toutes les informations sur la charge du réseau 2, le taux d'énergie d'origine renouvelable, les prévisions de variation de ce taux, de la production/consommation en général, les signaux tarifaires, etc.

Ces données peuvent être des données génériques obtenues localement, par exemple d'origine météorologique, qui peuvent indiquer dans quelle mesure les moyens de production d'énergie renouvelable vont être productifs, mais de façon préférée il s'agit de données plus complexes fournies depuis un réseau de communication 3 (typiquement le réseau internet) en particulier via le compteur 31, en particulier en temps réel.

Les données utilisées peuvent notamment être les champs de la TIC tels que par exemple : l'état binaire d'un ou plusieurs contact(s) sec ou virtuel(s), l'index tarifaire de la grille fournisseur et/ou distributeur en cours, le prix de l'électricité, le préavis de pointe mobile et/ou une ou plusieurs pointe(s) mobile(s), la tension, etc.

Dans un mode de réalisation alternatif, les données pour la génération de la consigne de puissance peuvent être fournies par un équipement d'accès à internet de type « box » d'un fournisseur d'accès à Internet. Ce boitier est connecté à l'élément de gestion 30 par des moyens de connexion réseau tels que le Wi-Fi, une liaison Ethernet, le CPL, etc., les données peuvent être alors des données météorologiques complètes (vitesse du vent, ensoleillement, etc.), des données pré-traitées sur des serveurs d'un fournisseur d'électricité pour optimiser la charge globale, etc.

La présente invention n'est ni limitée à un type de données descriptives d'un état dudit réseau électrique 2, ni à une manière de fournir ces données.

Selon un mode de réalisation préféré, l'élément de gestion 30 met en oeuvre un mode de fonctionnement nominal dit « suralimentation » (en d'autres termes « marche forcée ») utilisé pour augmenter la consommation du compresseur 11 et donc la quantité d'énergie stockée, d'où un risque majeur de déclenchement de l'organe de coupure 20, et l'intérêt accru du présent procédé.

Dans ce mode, l'élément de gestion 30 émet une consigne de hausse de puissance lorsque les données descriptives d'un état dudit réseau électrique 2 sont caractéristiques d'une surabondance actuelle et/ou d'un déficit futur d'énergie d'origine renouvelable au sein dudit réseau électrique 2 (en d'autres termes si la production d'origine renouvelable est à la baisse à court terme), de sorte à augmenter la consommation du compresseur 11.

Ce mode suralimentation est intéressant soit pour absorber une forte production d'énergie renouvelable, soit pour anticiper une prévision de faible production. Grâce à la suralimentation, l'effet de la pompe à chaleur 10 (chauffage ou climatisation) est amplifié. Cela augmente donc la consommation immédiate, mais limite la consommation à venir (puisque plus d'énergie est stockée, le prochain franchissement du premier seuil de température est retardé).

La consigne de hausse de puissance peut être calculée de sorte à maximiser la consommation d'énergie d'origine renouvelable, à prévenir la consommation d'énergie d'origine non-renouvelable, et à ne pas dépasser la puissance maximale de référence. L'idée est de soutirer au maximum l'énergie d'origine renouvelable au réseau 2, afin de prendre de l'avance et de ne pas avoir ultérieurement à consommer de l'énergie d'origine non-renouvelable.

Il est à noter que la régulation en puissance ne peut pas se faire au détriment du confort de l'utilisateur, et il peut être prévu que le module de contrôle 12 soit configuré pour ignorer la consigne de hausse de puissance lorsque la température du premier échangeur 14a est supérieure au deuxième seuil prédéfini (voir plus haut). En d'autres termes, lorsque ce deuxième seuil est atteint (par exemple 21°C, pour un chauffage réglé autour de 20°C à +/-1°C), la pompe à chaleur 10 régule en température (et plus en puissance) autour de cette valeur.

On note qu'un mode « sous-alimentation » (en d'autres termes « marche réduite ») peut être également permis pour diminuer la consommation des compresseurs 11 et donc la quantité d'énergie « stockée » sous forme thermique (un tel mode risquant très peu de déclencher l'organe de coupure 20).

C'est ce que l'on appelle un effacement, cela peut être très utile en prévision d'un pic de production d'énergie d'origine renouvelable. On évite ainsi de consommer de l'énergie fossile alors que l'on sait que l'énergie renouvelable sera bientôt trop abondante. Dans ce mode, l'élément de gestion 30 émet une consigne de baisse de puissance lorsque les données descriptives d'un état dudit réseau électrique 2 sont caractéristiques d'un déficit actuel et/ou d'une surabondance future d'énergie d'origine renouvelable au sein dudit réseau électrique 2 (en d'autres termes si la production d'origine renouvelable est à la hausse à court terme), de sorte à diminuer la consommation du compresseur 11.

*Système*

Selon un deuxième aspect, l'invention concerne également un système (i.e. une installation) pour la mise en oeuvre du présent procédé.

Ce système comprend donc :

- une pompe à chaleur 10 comprenant au moins un compresseur 11 de fluide caloporteur alimenté par un réseau électrique 2, et un module de contrôle 12 régulant en puissance la pompe à chaleur 10 ;
- un organe de coupure 20 apte à interrompre l'alimentation électrique dudit compresseur 11.

La pompe à chaleur 10 est typiquement en échange thermique via un premier échangeur 14a avec un milieu dont la température est à réguler (ledit milieu étant l'eau d'un réservoir d'eau chaude ou l'air intérieur d'une pièce), et de façon préférée est une pompe à chaleur hybride comprenant en outre un moyen de chauffage alternatif dont la source principale d'énergie n'est pas le réseau électrique 2.

Et ce système se distingue comme expliqué en ce que :

- il comprend en outre un élément de gestion 30 configuré pour calculer une puissance disponible pour la pompe à chaleur 10 en fonction d'au moins une puissance instantanée de la pompe à chaleur 10 et une puissance d'une puissance maximale de référence associée à l'organe de coupure 20 ; et, si ladite puissance maximale de référence associée à l'organe de coupure 20 est dépassée, calculer un temps avant mise en oeuvre d'une coupure par l'organe de coupure 20 en fonction de ladite puissance maximale de référence ;
- le module de contrôle 12 est configuré pour limiter progressivement la puissance instantanée de la pompe à chaleur 10 de sorte qu'à l'expiration dudit temps avant mise en oeuvre d'une coupure, la puissance instantanée de la pompe à chaleur 10 soit inférieure ou égale à ladite puissance disponible pour la pompe à chaleur 10.

**Revendications**

1. Procédé de modification de la consommation d'une pompe à chaleur (10) comprenant au moins un compresseur (11) de fluide caloporteur alimentée par un réseau électrique (2) et au moins un module de contrôle (12) régulant en puissance la pompe à chaleur (10), un organe de coupure (20) étant apte à interrompre l'alimentation électrique dudit compresseur (11), le procédé étant **caractérisé en ce qu'**il comprend des étapes de :

   (a) Calcul par un élément de gestion (30) d'une puissance disponible pour la pompe à chaleur (10) en fonction d'au moins une puissance instantanée de la pompe à chaleur (10) et une puissance maximale de référence associée à l'organe de coupure (20) ;

   (b) Si ladite puissance maximale de référence associée à l'organe de coupure (20) est dépassée, calcul par l'élément de gestion (30) d'un temps avant mise en oeuvre d'une coupure par l'organe de coupure (20) en fonction d'au moins ladite puissance maximale de référence ;

   (c) Limitation progressive par le module de contrôle (12) de la puissance instantanée de la pompe à chaleur (10) de sorte qu'à l'expiration dudit temps avant mise en oeuvre d'une coupure, la puissance instantanée de la pompe à chaleur (10) soit inférieure ou égale à ladite puissance disponible pour la pompe à chaleur (10).

2. Procédé selon la revendication 1, dans lequel ladite puissance maximale de référence associée à l'organe de coupure (20) est une puissance de coupure associée à un compteur électrique (31), la puissance disponible pour la pompe à chaleur (10) étant également calculée à l'étape (a) en fonction d'une puissance instantanée mesurée par le compteur (31).

3. Procédé selon les revendications 1 et 2, dans laquelle l'étape (b) est mise en oeuvre si la puissance instantanée mesurée par le compteur (31) est supérieure à ladite puissance de coupure.

4. Procédé selon l'une des revendications 2 et 3, dans lequel l'organe de coupure (20) est un disjoncteur associé au compteur électrique (31) ou un interrupteur intégré au compteur électrique (31).

5. Procédé selon l'une des revendication 2 à 4, dans lequel la puissance disponible pour la pompe à chaleur (10) $P_{pac\_seuil}$ est calculée à l'étape (a) par la formule $P_{pac\_seuil} = P_{pac} + (P_{compteur\_seuil} - P_{compteur})$, où $P_{pac}$ est ladite puissance instantanée de la pompe à chaleur (10), $P_{compteur\_seuil}$ est ladite puissance maximale de référence associée à l'organe de coupure (20), et $P_{compteur}$ est ladite puissance instantanée mesurée par le compteur (31).

6. Procédé selon l'une des revendications précédentes, dans lequel ledit compresseur (11) est un compresseur présentant une vitesse de rotation variable, le module de contrôle (12) contrôlant la vitesse de rotation du compresseur (11) pour réguler en puissance la pompe à chaleur (10), ladite limitation progressive de puissance de l'étape (c) étant une décélération progressive de la rotation dudit compresseur (11).

7. Procédé selon la revendication 6, dans lequel ladite décélération progressive de la rotation dudit compresseur (11) est conforme à une rampe.

8. Procédé selon la revendication 7, dans lequel ladite rampe présente la pente minimale pour qu'à l'expiration dudit temps avant mise en oeuvre d'une coupure, la puissance instantanée de la pompe à chaleur (10) soit inférieure ou égale à ladite puissance disponible pour la pompe à chaleur (10).

9. Procédé selon la revendication 8, dans lequel la pente de ladite rampe est donnée par la formule,

$$R = \frac{V_{pac} - V_{pac\_seuil}}{t_{coupure}}$$ où $V_{pac}$ est la vitesse de rotation du compresseur (11) à la puissance instantanée, $V_{pac\_seuil}$ est la vitesse de rotation du compresseur (11) à la puissance disponible, et $t_{coupure}$ est le temps de coupure.

10. Procédé selon l'une des revendications précédentes, dans lequel l'élément de gestion (30) est en outre configuré pour contrôler le module de contrôle (12) en fonction d'au moins des données descriptives d'un état dudit réseau électrique (2), le module de contrôle (12) régulant en puissance la pompe à chaleur (10) en fonction d'au moins une consigne de puissance émise par l'élément de gestion (30).

11. Procédé selon la revendication 10, dans lequel les données descriptives d'un état dudit réseau électrique (2) sont caractéristiques d'une surabondance actuelle et/ou d'un déficit futur d'énergie d'origine renouvelable au sein dudit réseau électrique (2), ladite consigne générée par l'élément de gestion (30) étant une consigne de hausse de puissance, de sorte à augmenter la consommation du compresseur (11).

12. Procédé selon l'une des revendication 10 et 11 en combinaison avec l'une des revendications 2 à 5, dans laquelle le compteur (31) reçoit lesdites données descriptives d'un état du réseau électrique (2) depuis un réseau de communication (3) et est connecté au module de contrôle (12), l'élément de gestion (30) étant un module logiciel mis en oeuvre par le module de contrôle (12) et/ou le compteur (31).

13. Système comprenant :

- une pompe à chaleur (10) comprenant au moins un compresseur (11) de fluide caloporteur alimenté par un réseau électrique (2), et un module de contrôle (12) régulant en puissance la pompe à chaleur (10) ;
- un organe de coupure (20) apte à interrompre l'alimentation électrique dudit compresseur (11) ;

le système étant **caractérisé en ce que** :

- il comprend en outre un élément de gestion (30) configuré pour calculer une puissance disponible pour la pompe à chaleur (10) en fonction d'au moins une puissance instantanée de la pompe à chaleur (10) et une puissance d'une puissance maximale de référence associée à l'organe de coupure (20) ; et, si ladite puissance maximale de référence associée à l'organe de coupure (20) est dépassée, calculer un temps avant mise en oeuvre d'une coupure par l'organe de coupure (20) en fonction de ladite puissance maximale de référence ;
- le module de contrôle (12) est configuré pour limiter progressivement la puissance instantanée de la pompe à chaleur (10) de sorte qu'à l'expiration dudit temps avant mise en oeuvre d'une coupure, la puissance instantanée de la pompe à chaleur (10) soit inférieure ou égale à ladite puissance disponible pour la pompe à chaleur (10).

14. Système selon la revendication 13, dans lequel la pompe à chaleur (10) est en échange thermique via un premier échangeur (14a) avec un milieu dont la température est à réguler, ledit milieu étant l'eau d'un réservoir d'eau chaude ou l'air intérieur d'une pièce.

15. Système selon l'une des revendications 13 et 14, dans lequel la pompe à chaleur (10) est une pompe à chaleur hybride comprenant en outre un moyen de chauffage alternatif dont la source d'énergie principale n'est pas le réseau électrique (2).

**Patentansprüche**

1. Verfahren zum Ändern des Verbrauchs einer Wärmepumpe (10), die mindestens einen Wärmeträgerfluid-Verdichter (11), der von einem Elektrizitätsnetz (2) gespeist wird, und mindestens ein Steuermodul (12) umfasst, das die Leistung der Wärmepumpe (10) regelt, wobei ein Abschaltorgan (20) in der Lage ist, die elektrische Speisung des Verdichters (11) zu unterbrechen, wobei das Verfahren **dadurch gekennzeichnet ist, dass** es Schritte umfasst des:

(a) Berechnens, durch ein Verwaltungselement (30), einer Leistung, die für die Wärmepumpe (10) verfügbar ist, in Abhängigkeit von mindestens einer Momentanleistung der Wärmepumpe (10) und einer maximalen Bezugsleistung, die dem Abschaltorgan (20) zugeordnet ist;
(b) wenn die dem Abschaltorgan (20) zugeordnete maximale Bezugsleistung überschritten wird, Berechnens, durch das Verwaltungselement (30), einer Zeit vor Umsetzen einer Abschaltung durch das Abschaltorgan (20) in Abhängigkeit von mindestens der maximalen Bezugsleistung;
(c) allmählichen Begrenzens, durch das Steuermodul (12), der Momentanleistung der Wärmepumpe (10), sodass beim Ablauf der Zeit vor Umsetzen einer Abschaltung die Momentanleistung der Wärmepumpe (10) kleiner oder gleich der Leistung ist, die für die Wärmepumpe (10) verfügbar ist.

2. Verfahren nach Anspruch 1, wobei die dem Abschaltorgan (20) zugeordnete maximale Bezugsleistung eine Abschaltleistung ist, die einem Elektrizitätszähler (31) zugeordnet ist, wobei die Leistung, die für die Wärmepumpe (10) verfügbar ist, ebenfalls im Schritt (a) in Abhängigkeit von einer vom Zähler (31) gemessenen Momentanleistung berechnet wird.

3. Verfahren nach den Ansprüchen 1 und 2, wobei der Schritt (b) umgesetzt wird, wenn die vom Zähler (31) gemessene Momentanleistung größer ist als die Abschaltleistung.

4. Verfahren nach einem der Ansprüche 2 und 3, wobei das Abschaltorgan (20) ein Leistungsschutzschalter ist, der dem Elektrizitätszähler (31) zugeordnet ist, oder ein Unterbrecher, der im Elektrizitätszähler (31) integriert ist.

5. Verfahren nach einem der Ansprüche 2 bis 4, wobei die für die Wärmepumpe (10) verfügbare Leistung $P_{WP\_Schwelle}$ im Schritt (a) über die Formel $P_{WP\_Schwelle} = P_{WP} + (P_{Zähler\_Schwelle} - P_{Zähler})$ berechnet wird, worin $P_{WP}$ die Momentanleistung der Wärmepumpe (10) ist, $P_{Zähler\_Schwelle}$ die maximale Bezugsleistung ist, die dem Abschaltorgan (20) zugeordnet ist, und $P_{Zähler}$ die vom Zähler (31) gemessene Momentanleistung ist.

6. Verfahren nach einem der vorstehenden Ansprüche, wobei der Verdichter (11) ein Verdichter ist, der eine variable Drehzahl aufweist, wobei das Steuermodul (12) die Drehzahl des Verdichters (11) steuert, um die Wärmepumpe (10) in der Leistung zu regeln, wobei das allmähliche Leistungsbegrenzen aus dem Schritt (c) ein allmähliches Verlangsamen der Drehung des Verdichters (11) ist.

7. Verfahren nach Anspruch 6, wobei das allmähliche Verlangsamen der Drehung des Verdichters (11) mit einer Rampe übereinstimmt.

8. Verfahren nach Anspruch 7, wobei die Rampe die minimale Steigung aufweist, damit beim Ablauf der Zeit vor Umsetzung einer Abschaltung die Momentanleistung der Wärmepumpe (10) kleiner oder gleich der Leistung ist, die für die Wärmepumpe (10) verfügbar ist.

9. Verfahren nach Anspruch 8, wobei die Steigung der Rampe von der Formel

$$R = \frac{V_{WP} - V_{WP\_Schwelle}}{t_{Abschalt}}$$ wiedergegeben wird, worin $V_{WP}$ die Drehzahl des Verdichters (11) bei der Momentanleistung ist, $V_{WP\_Schwelle}$ die Drehzahl des Verdichters (11) bei der verfügbaren Leistung ist, und $t_{Abschalt}$ die Abschaltzeit ist.

10. Verfahren nach einem der vorstehenden Ansprüche, wobei das Verwaltungselement (30) weiter dafür konfiguriert ist, das Steuermodul (12) in Abhängigkeit von mindestens Daten zu steuern, die einen Zustand des Elektrizitätsnetzes (2) beschreiben, wobei das Steuermodul (12) die Wärmepumpe (10) in Abhängigkeit von mindestens einem vom Verwaltungselement (30) ausgegebenen Leistungssollwert in der Leistung regelt.

11. Verfahren nach Anspruch 10, wobei die Daten, die einen Zustand des Elektrizitätsnetzes (2) beschreiben, für ein aktuelles Überangebot und/oder einen künftigen Mangel an Energie aus erneuerbarem Ursprung innerhalb des Elektrizitätsnetzes (2) charakteristisch sind, wobei der vom Verwaltungselement (30) erzeugte Sollwert ein Leistungssteigerungs-Sollwert ist, sodass der Verbrauch des Verdichters (11) erhöht wird.

12. Verfahren nach einem der Ansprüche 10 und 11 in Kombination mit einem der Ansprüche 2 bis 5, wobei der Zähler (31) die Daten, die einen Zustand des Elektrizitätsnetzes (2) beschreiben, aus einem Kommunikationsnetz (3) empfängt und mit dem Steuermodul (12) verbunden ist, wobei das Verwaltungselement (30) ein Softwaremodul ist, das vom Steuermodul (12) und/oder dem Zähler (31) umgesetzt wird.

13. System, umfassend:

- eine Wärmepumpe (10), die mindestens einen Wärmeträgerfluid-Verdichter (11), der von einem Elektrizitätsnetz (2) gespeist wird, und ein Steuermodul (12) umfasst, das die Wärmepumpe (10) in der Leistung regelt;
- ein Abschaltorgan (20), das in der Lage ist, die elektrische Speisung des Verdichters (11) zu unterbrechen;

wobei das System **dadurch gekennzeichnet ist, dass**:

- es weiter ein Verwaltungselement (30) umfasst, das dafür konfiguriert ist, eine Leistung, die für die Wärmepumpe (10) verfügbar ist, in Abhängigkeit von mindestens einer Momentanleistung der Wärmepumpe (10) und einer Leistung einer maximalen Bezugsleistung, die dem Abschaltorgan (20) zugeordnet ist, zu berechnen; und wenn die dem Abschaltorgan (20) zugeordnete maximale Bezugsleistung überschritten wird, eine Zeit vor Umsetzen einer Abschaltung durch das Abschaltorgan (20) in Abhängigkeit von der maximalen Bezugsleistung zu berechnen;
- das Steuermodul (12) dafür konfiguriert ist, die Momentanleistung der Wärmepumpe (10) allmählich zu begrenzen, sodass beim Ablauf der Zeit vor Umsetzen einer Abschaltung die Momentanleistung der Wärmepumpe (10) kleiner oder gleich der Leistung ist, die für die Wärmepumpe (10) verfügbar ist.

14. System nach Anspruch 13, wobei die Wärmepumpe (10) über einen ersten Tauscher (14a) mit einem Medium, dessen Temperatur geregelt werden soll, in thermischem Austausch steht, wobei das Medium das Wasser eines Warmwasserbehälters oder die Innenluft eines Raumes ist.

15. System nach einem der Ansprüche 13 und 14, wobei die Wärmepumpe (10) eine Hybrid-Wärmepumpe ist, die weiter ein alternatives Heizmittel umfasst, dessen Haupt-Energiequelle nicht das Elektrizitätsnetz (2) ist.

## Claims

1. Method for modifying the consumption of a heat pump (10) comprising at least one compressor (11) for compressing heat-transfer fluid powered by an electrical network (2) and at least one control module (12) controlling the power of the heat pump (10), a cutoff member (20) being capable of cutting off the electrical power supply of said compressor (11), the method being **characterised in that** it comprises steps of:

   (a) Calculating, by a management element (30), a power available for the heat pump (10) depending on at least one instantaneous power of the heat pump (10) and a reference maximum power associated with the cutoff member (20);
   (b) If said reference maximum power associated with the cutoff member (20) is exceeded, calculating, by the management element (30), a time prior to implementation of a cutoff by the cutoff member (20) depending on said reference maximum power;
   (c) Gradually limiting, by the control module (12), the instantaneous power of the heat pump (10) such that, upon expiry of said time prior to implementation of a cutoff, the instantaneous power of the heat pump (10) is less than or equal to said power available for the heat pump (10).

2. Method according to claim 1, wherein said reference maximum power associated with the cutoff member (20) is a cutoff power associated with an electric meter (31), the power available for the heat pump (10) also being calculated in the step (a) depending on an instantaneous power measured by the meter (31).

3. Method according to claims 1 and 2, wherein the step (b) is implemented if the instantaneous power measured by the meter (31) is greater than said cutoff power.

4. Method according to one of claims 2 and 3, wherein the cutoff member (20) is a circuit-breaker associated with the electric meter (31) or a switch integrated into the electric meter (31).

5. Method according to one of claim 2 to 4, wherein the power available for the heat pump (10) $P_{hp\_threshold}$ is calculated in the step (a) by the formula $P_{hp\_threshold} = P_{hp} + (P_{meter\_threshold} - P_{meter})$, where $P_{hp}$ is said instantaneous power of the heat pump (10), $P_{meter\_threshold}$ is said reference maximum power associated with the cutoff member (20), and $P_{meter}$ is said instantaneous power measured by the meter (31).

6. Method according to one of the preceding claims, wherein said compressor (11) is a compressor that has a variable rotation speed, with the control module (12) controlling the rotation speed of the compressor (11) for controlling the power of the heat pump (10), said gradual limiting of the power of the step (c) being a gradual deceleration of the rotation of said compressor (11) .

7. Method according to claim 6, wherein said gradual deceleration of the rotation of said compressor (11) is compliant with a ramp.

8. Method according to claim 7, wherein said ramp has the minimum slope so that upon expiry of said time before implementation of a cutoff, the instantaneous power of the heat pump (10) is less than or equal to said power available for the heat pump (10).

9. Method according to claim 8, wherein the slope of said ramp is given by the formula, $$R = \frac{Vhp - Vhp\_threshold}{tcutoff}$$ where $V_{hp}$ is the rotation speed of the compressor (11) at the instantaneous power, $V_{hp\_threshold}$ is the rotation speed of the compressor (11) at the power available, and $t_{cutoff}$ is the cutoff time.

**10.** Method according to one of the preceding claims, wherein the management element (30) is furthermore configured to control the control module (12) depending on at least descriptive data of a state of said electrical network (2), the control module (12) controlling the power of the heat pump (10) depending on at least one power setpoint emitted by the management element (30).

**11.** Method according to claim 10, wherein the descriptive data of a state of said electrical network (2) is characteristic of a current overabundance and/or of a future deficit of energy from renewable sources within said electrical network (2), said setpoint generated by the management element (30) being an increase in power setpoint, in such a way as to increase the consumption of the compressor (11).

**12.** Method according to one of claims 10 and 11 combined with one of claims 2 to 5, wherein the meter (31) receives said descriptive data of a state of the electrical network (2) from a communication network (3) and is connected to the control module (12), the management element (30) being a software module implemented by the control module (12) and/or the meter (31).

**13.** System comprising:

- a heat pump (10) comprising at least one compressor (11) for compressing heat-transfer fluid powered by an electrical network (2), and a control module (12) controlling the power of the heat pump (10);
- a cutoff member (20) able to cut off the electrical power supply of said compressor (11);

the system being **characterised in that**:

- it further comprises a management element (30) configured to calculate a power available for the heat pump (10) depending on at least one instantaneous power of the heat pump (10) and a power of a reference maximum power associated with the cutoff member (20); and, if said reference maximum power associated with the cutoff member (20) is exceeded, calculating a time prior to implementation of a cutoff by the cutoff member (20) depending on said reference maximum power;
- the control module (12) is configured to gradually limit the instantaneous power of the heat pump (10) in such a way that upon expiry of said time prior to implementation of a cutoff, the instantaneous power of the heat pump (10) is less than or equal to said power available for the heat pump (10).

**14.** System according to claim 13, wherein the heat pump (10) is a heat exchange via a first exchanger (14a) with a medium of which the temperature is to be controlled, said medium being the water of a hot water tank or the air inside a room.

**15.** System according to one of claims 13 and 14, wherein the heat pump (10) is a hybrid heat pump further comprising an alternative means of heating of which the main source of energy is not the electrical network (2).

FIG. 1

**FIG. 2**

Temps de coupure

$t_{coupure}$

$P_{compteur\_}seuil$    $P_{compteur}$

Puissance au compteur

**FIG. 3a**

Vitesse compresseur

$V_{pac}$

$V_{pac\_}seuil$

$t_{timer}$    $t_{coupure}$

temps

**FIG. 3b**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1363225
- JP 7103554 A

- DE 102007056461 A1